# EUROPEAN PATENT SPECIFICATION

(11) **EP 4 299 543 B1**
(45) Date of publication and mention of the grant of the patent: **11.12.2024**
(21) Application number: 22181497.3
(22) Date of filing: 28.06.2022
(51) Int. Cl.: C04B 18/16, C04B 28/04

(54) **COMPOSITE CEMENT CONTAINING RECYCLED CEMENT PASTE AND CALCINED CLAY**
KOMPOSITZEMENT ENTHALTEND RECYCELTEN ZEMENTLEIM UND KALZINIERTEN TON
CIMENT COMPOSITE CONTENANT DE LA PÂTE DE CIMENT RECYCLÉE ET DE L'ARGILE CALCINÉE

(43) Date of publication of application: 03.01.2024
(73) Proprietor: Heidelberg Materials AG, 69120 Heidelberg (DE)
(72) Inventor: ZAJAC, Maciej, 69120 Heidelberg (DE); SKOCEK, Jan, 69120 Heidelberg (DE); DIENEMANN, Wolfgang, 69120 Heidelberg (DE)
(74) Representative: Zellentin & Partner mbB Patentanwälte

(56) References cited:
- WO-A1-2010/130623
- US-A1- 2020 331 805

## Description

The present invention relates to composite cements and a method for manufacturing them as well as a method for manufacturing a hydraulically hardening building material.

Cement industry is struggling with the high CO₂ emissions related to the production of the cement clinker. The easiest solution to limit this environmental footprint is to produce composite cements. Unfortunately the increase of the proportion of the composite cements in the product portfolio is limited by the availability of high quality supplementary cementitious material (abbreviated SCM herein), i.e. reactive materials resulting in appreciable strength evolution. Usual materials like granulated blast furnace slag and high quality fly ashes are growing short.

Another issue is the increasing amounts of concrete waste, in particular concrete waste from demolishing. There have been multiple proposals to make the waste useful as recycled concrete aggregate (abbreviated RCA) in past years. Utilization of recycled concrete aggregates is comparably easy and helps to achieve higher sustainability and preserves the resources of the natural aggregates.

However, the concrete waste also contains a significant amount of recycled concrete fines (abbreviated RCF), particularly the recycled cement paste (abbreviated RCP herein). To make those useful as SCM is not easy because of the inappropriate characteristics, e.g. high water demand.

One proposal to improve usefulness as SCM is a carbonation of the recycled concrete fines. Carbonation of RCF, especially of the contained RCP, not only improves the properties but also has the potential to bind a significant amount of CO₂. The carbonated recycled cement paste (abbreviated cRCP) is a valuable SCM since cRCP is characterized by pozzolanic properties. Composite cements containing cRCP develop useful strength at substantial clinker replacement values.

Another possible SCM having moved into the focus recently is calcined clay. Clay is an abundant material. However, requirements on clay quality to be useful as SCM are numerous. The raw clay should contain sufficient clay minerals, e.g. at least 30 wt.-%, at least 50 wt.-% or preferably even more, and possibly clay minerals having similar optimum calcination temperature. Good quality clays in this sense are not abundant and the mostly sought for kaolinite clays have several other established uses. Nonetheless, in view of the desired expansion of the proportion of composite cements and the insufficient/decreasing availability of other usual SCM clay is increasingly used. Many proposals have been made on how to optimize calcination and/or to utilize clay raw materials with less ideal quality. Thereby, clay utilization can mitigate the problem of SCM availability.

However, a severe problem with composite cements containing higher amounts of SCM is a slow early strength development. Measures like heating to accelerate hydration or using more reactive cement clinker, e.g. clinker ground finer, partly undo the carbon dioxide savings of SCM use. Proposals relying on complicated mix designs of composite cements with specific particle size distributions (abbreviated PSD) of the components are not always easy to implement. Moreover, they may still require high grinding efforts to obtain the PSD needed which then also reduce the achievable CO₂ saving. Thus, the problem to find more environmentally friendly cements in sufficient quantity is still not solved and the object remains to provide sufficiently reactive cements with reduced carbon dioxide footprint.

US 2020/331805 discloses a method of reducing clinker by means of mineral fines such as e.g. wash-out fines from concrete production, optionally carbonated, and supplementary cementitious material such as metakaolin as replacement.

WO 2010/130623 discloses an alkali sulphate activated composite cement obtained from Portland cement clinker and calcined clay.

It was now surprisingly found that the performance of ternary composite cements containing cement clinker, recycled cement paste - especially carbonated recycled cement paste - and calcined clay is better when compared to the binary systems cement clinker + carbonated recycled cement paste or cement clinker + calcined clay, respectively. In the ternary systems the 1 to 7 days compressive strength is higher than that of cement clinker + calcined clay blends while the 28 days and later compressive strength is higher than that of the cement clinker + carbonated recycled cement paste blends. Especially the improved early strength development is important for construction.

Thus, the mentioned object is achieved by a composite cement containing from 5 to 70 wt.-% cement clinker and from 30 to 95 wt.-% mixture of recycled cement paste - preferably carbonated recycled cement paste - and calcined clay with a weight ratio carbonated or not carbonated recycled cement paste to calcined clay from 4 to 0.1. The problem is further solved by a method for manufacturing composite cement wherein from 5 to 70 wt.-% cement clinker is blended with from 30 to 95 wt.-% mixture of recycled cement paste - preferably carbonated recycled cement paste - and calcined clay with a weight ratio carbonated or not carbonated recycled cement paste to calcined clay from 4 to 0.1 in the mixture. The object is also achieved by a method for manufacturing hydraulically hardening building materials wherein during mixing of the hydraulically hardening building material from 5 to 70 wt.-% ground cement clinker is blended with from 30 to 95 wt.-% of a mixture of recycled cement paste - preferably carbonated recycled cement paste - and calcined clay with a weight ratio carbonated or not carbonated recycled cement paste to calcined clay from 4 to 0.1 or a composite cement according to the invention is used as cement.

Using especially carbonated recycled cement paste blended with calcined clay to manufacture the composite cements provides composite cements characterized by a very low CO₂ footprint (process emissions < 250 kg CO₂/t cement feasible), a high content of recycled material, a high material efficiency and a performance comparable to or exceeding existing products. The composite cement according to the invention is also advantageous over ternary composite cements containing limestone and calcined clay, because the natural mineral limestone can be replaced by a waste material. Moreover when carbonated recycled cement paste is used it provides a very reactive, i.e. pozzolanic, Al and/or Si gel.

To simplify the description compounds are mostly named by the pure form, without explicit mentioning of solid solutions, foreign ion substitution and impurities etc. as are usual in technical and industrial materials. As one of ordinary skill in the art knows, the exact composition of the phases described may vary due to substitution with foreign ions. Such compounds are comprised when mentioning the pure form herein unless it is expressly stated otherwise.

The term "reactive" shall mean a hydraulic reactivity unless specified otherwise. Hydraulic reactivity designates the reaction of a compound with water or other water containing compounds to form hydrated phases including a reaction of two or more compounds occurring simultaneously.

Herein, clinker designates a sinter product obtained by burning a raw material at elevated temperature and containing at least one hydraulic phase. Burning means a change of one or more property of the starting material such as chemistry, crystallinity, phase composition, spatial arrangement and bonds of lattice atoms which is brought about by a supply of thermal energy. The starting material may be a single material, but usually it is a mixture. The starting material is typically finely ground and then designated as raw meal. The starting material may contain mineralizers, which are substances decreasing the temperature necessary for melting and/or act as fluxes and/or enhance clinker formation e.g. by forming solid solutions or stabilization of phases. Mineralizers can be part of the starting material components or be added as separate component.

Cement designates a material that, after mixing with an aqueous liquid to form a paste, is able to develop mechanical strength by hydraulic reaction. Thus, cement mostly denotes a clinker ground with or without further components, but also mixtures like super sulphated cement, geopolymer binder, and hydraulic materials not obtained by sintering like a dicalcium silicate obtained by hydrothermal treatment. Composite cement or binder mixture means a mixture containing cement and a supplementary cementitious material. A cement, composite cement or binder is usually used adding water or another liquid and mostly also aggregate. Typically, admixtures and/or additives are added to the binder and/or the paste.

A supplementary cementitious material (abbreviated SCM) is defined as a pozzolanic and/or latent hydraulic material useful to replace a part of the clinker in a composite cement or binder. Latent hydraulic materials have a composition that allows hydraulic reaction upon contact with water, wherein typically an activator is needed to enable hardening within technically feasible times. Activator means a substance that accelerates the hardening of latent hydraulic materials. It can be an addition like sulfate or calcium hydroxide, calcium oxide and/or products of the hydraulic reaction of the ground clinker, e.g. calcium silicates liberate calcium hydroxide during hardening. Pozzolanic materials are characterized by a content of reactive silica and/or alumina which form strength providing calcium silicate hydrates and calcium aluminate hydrates and calcium silicate aluminate hydrates, respectively, during hydration of the clinker together with the calcium hydroxides liberated. In practice the limit between latent hydraulic and pozzolanic materials is not well defined, for example fly ashes can be both latent hydraulic and pozzolanic depending on their calcium oxide content. Consequently, the term SCM designates both latent hydraulic as well as pozzolanic materials. However, not reactive or only slightly reactive materials like limestone that substantially do not take part in the hydraulic reactivity have to be clearly differentiated from SCM, with which they are sometimes summarized as mineral additions.

Hydraulically hardening building material means a wet mixture that is able to harden hydraulically, and comprises a cement or binder as well as optionally any other addition contained to adjust the properties like final strength, processability of the wet mixture and strength development properties, to the intended use of the building material. For example, a concrete used to build a bridge needs other properties than a screed for casting a floor or a mortar for laying bricks.

Building structure denotes the hardened building material, e.g. a pre-cast concrete element or a floor or a bridge part from cast in place concrete.

Carbonation or carbonatization means a reaction with carbon dioxide, which can be supplied as gas, solution or solid, forming carbonates, possibly also hydrogen carbonates or other compounds comprising the CO₂²⁻ ion. The terms carbonation and carbonatization are used synonymously.

According to the invention a composite cement is made, containing from 5 to 70 wt.-% cement clinker blended with from 30 to 95 wt.-% mixture of carbonated or not carbonated recycled cement paste and calcined clay with a weight ratio carbonated or not carbonated recycled cement paste to calcined clay from 4 to 0.1 in the mixture. Such a composite cement according to the invention shows an appreciable early strength development, preferably 5 %, more preferred 10 %, and most preferred 15 % higher strength at a given time of less than 1 day or 2 days hydration when compared to the binary calcined clay system, while carbon dioxide emissions are reduced by 20 % or more compared to ordinary Portland cement made from the same raw materials with the same process settings and still by up to 5 % comparing composite cements comprising calcined clay and cRCP with such comprising calcined clay and limestone. In spite of the comparably high amount of SCM contained, the properties of a hydraulically hardening building material made from the composite cement are as required, e.g. by a standard, without having to use unusually finely ground cement clinker or elaborate blends from components with specific PSD.

Preferably, the composite cement according to the invention contains from 10 to 65 wt.-% cement clinker blended with from 90 to 35 wt.-% mixture of carbonated or not carbonated recycled cement paste and calcined clay, more preferred from 20 to 60 wt.-% cement clinker blended with from 80 to 40 wt.-% mixture of carbonated or not carbonated recycled cement paste and calcined clay, and most preferred from 40 to 50 wt.-% cement clinker blended with from 60 to 50 wt.-% mixture of carbonated or not carbonated recycled cement paste and calcined clay

The weight ratio between cRCP or RCP and calcined clay in the mixture ranges from 4 to 0.1, preferably from 3 to 0.2, and most preferred from 2 to 0.3.

The composite cement can be made by separate grinding of the cement clinker or by co-grinding it with cRCP/RCP and/or calcined clay. Typically, the cement clinker is ground to a fineness of d₉₀ < 110 µm, preferably a d₉₀ < 100 µm, and most preferred a d₉₀ < 90 µm. The particle size distribution of the composite cement should preferably have a d₉₀ / d₅₀ / d₁₀ lower than 150 µm / 50 µm / 20µm, more preferred lower than 130 µm / 40 µm / 10 µm and most preferred lower than 110 µm / 20 µm / 5 µm. The Blaine value should preferably be higher than 3000 cm²/g, more preferred > 4000 cm²/g and most preferred > 5000 cm²/g.

In one embodiment the mixture of cRCP or RCP and calcined clay is provided as an active filler for a hydraulically hardening building material instead of blending it with the cement clinker.

Cement clinker and its manufacturing are well known in the art, no specific materials or process settings are needed according to the invention. Of course, raw materials and processes able to save natural resources and reduce carbon dioxide emissions are preferably applied to achieve the highest possible environmental friendliness. The hydraulic cement is preferably selected from Portland cement with or without sulfate, calcium sulfoaluminate cement, calcium aluminate cement and dicalcium silicate cement. Preferred hydraulic cements are Portland cements, calcium sulfoaluminate cement and calcium aluminate cement. Especially preferred are Portland cements.

The carbonated or not carbonated recycled cement paste is typically a by-product of manufacturing recycled concrete aggregate from concrete demolishing waste. Treatment of the waste usually comprises crushing, extracting foreign materials (e.g. wood, metal, plastic, etc.), grinding and sieving/classifying to separate the coarse fraction comprising the aggregate from the fine fraction comprising RCP and fine aggregate as well as comminuted aggregate particles. It is also possible to use concrete waste like residues in the washing water from cleaning concrete mixing devices and tools for placing concrete as well as discarded paste. The exact distribution and composition of the RCP depends on the waste and the conditions used in the treatment.

It has also been proposed to simultaneously treat the waste with attrition force and carbon dioxide, because carbonation of the RCP helps to detach it from the aggregate, see e.g. US 2015/0210594 A1, US 2016/0046532 A1, and EP 3 744 700 A1. Recycled cement paste obtained through such processes is considered carbonated RCP herein, as long as the carbonation degree is at least 50 wt.-%. Depending on method and actual conditions used the carbonation degree can be small, even only a few percent.

Likewise, the known approaches to obtain carbonated recycled cement paste from concrete waste, RCF or RCP are useful. Examples are found inter alia in EP 3 498 681 A1, EP 3 581 257 A1, EP 3 656 750 A1, EP 3 750 619 A1, and EP 3 778 525 A1 and the references cited therein. Thus, recycled cement paste can be carbonated as known per se by wet, semi dry or dry methods. Additionally, naturally carbonated recycled cement paste can be used. The carbonation degree can be from 5 to 50 wt.-%, preferably from 10 to 75 wt.-%, and most preferred from 15 to 100 wt.-%. When using wet carbonation the addition of substances or materials modifying the properties of the carbonated material as described in the applications mentioned in the previous paragraph is possible.

The PSD of the carbonated or not carbonated recycled cement paste usually has a d₉₀ < 110 µm, preferably a d₉₀ < 100 µm, and most preferred a d₉₀ < 90 µm. Herein, particle sizes below 1 or 2 mm are measured with the laser diffraction analysis while particle sizes of 1 or 2 mm and above are measured by sieving.

Calcined clay is described as main component of composite cements in cement and concrete standards like EN 197-1 or ASTM C618. However, as mentioned before to obtain good quality SCM a high-grade raw clay should be used as starting material for calcination. High-quality clays consisting of a few or only one phase are rare in actual practice and therefore too expensive because of the competition with other industry branches. However, with mixtures of clay phases it is difficult to set an optimum calcination temperature, or to put it another way, the different optimum temperatures for different constituents make it impossible to activate the entire starting material. If the temperature is too low, insufficient volumes will be activated. At somewhat higher temperatures, only those phases that react at these lower temperatures will be activated, which in most cases is still too low a fraction. Although a sufficient fraction will generally be activated at medium temperatures, some fractions of the starting material will have already formed crystalline and therefore inert phases. Although (nearly) all fractions of the starting material will be activated at high temperatures, most fractions will have already formed inert crystalline phases. The various clay minerals have the following optimum calcination temperatures:
- Serpentinite 400 - 500°C,
- Palygorskite 600 - 800°C,
- Kaolinite 600 - 800°C,
- Halloysite 600 - 800°C,
- Pyrophyllite 750 - 950°C,
- Montmorillonite 800 - 950°C,
- Illite 800 - 1000°C,
- Mica 650 - 1000°C.
Non-converted phases have an especially high water demand and therefore must be avoided as much as possible. Many starting materials also have too low an Al₂O₃ content, but considerable amounts of SiO₂ and other constituents such as Fe₂O₃, CaO, MgO, Na₂O and K₂O. For these reasons, many clays, which may fulfill minimum technical requirements, cannot be used economically and in certain circumstances clay-containing or clay-rich materials therefore have to be dumped. Thus, prior proposals generally recommend kaolin rich clay, i.e. metakaolin, as SCM, see e.g. A. Mitrovié et al, "Properties of composite cement with commercial and manufactured metakaolin", Technical Gazette 20, 4 (2013), 683-687 (ISSN 1848-6339); and J. Ding and Z. Li, "Effects of Metakaolin and silica fume on properties of concrete", ACI Materials Journal, July-August 2002, 393-398. It has also been proposed to make lower quality clays usable as SCM by treating them hydrothermally or by calcining them mixed with limestone or by combining them with limestone, see e.g. EP 2 253 600 A1 and US 5,626,665, or by co-calcination with dolomite, see e.g. WO 2016/082936 A1. Another approach is a specific PSD, see e.g. EP 2 429 966 B1.

According to the invention suitable raw clays preferably have a content of kaolinite from 20 to 100 wt.-% in the clay raw material. The calcined clay used according to the invention is preferably calcined at a temperature close to the optimum. The PSD of the clay particles typically has a d₉₀ < 110 µm, preferably a d₉₀ < 100 µm, and most preferred a d₉₀ < 90 µm.

The method according to the invention comprises blending from 5 to 70 wt.-% cement clinker with from 30 to 95 wt.-% mixture of recycled cement paste - preferably carbonated recycled cement paste - and calcined clay with a weight ratio of carbonated or not carbonated recycled cement paste to calcined clay from 4 to 0.1 in the mixture. Blending can occur in any way and device known as such. In one preferred embodiment blending of at least two of the components is combined with their grinding. Usual grinding aids can be used, especially amines like monoethanolamine (MEA), diglycolamine (DGA), diethanolamine (DEA), diisopropanolamine (DIPA), methyldiethanolamine (MDEA), triethanolamine (TEA), triisopropanolamine (TIPA), and diethanol-isopropanolamine (DEIPA). A separately ground cement clinker typically has a Blaine fineness from 2000 to 10000 cm²/g, preferably from 3000 to 9000 cm²/g, most preferred from 4000 to 8000 cm²/g.

In addition to cement clinker, cRCP or RCP, and calcined clay the composite cement according to the invention or a hydraulically hardening building material made from it may and often will contain admixtures and/or additives. Admixtures and/or additives can be added - independently from each other - already to the carbonation of the RCP; during grinding of the cement clinker, cRCP or RCP, calcined clay or any mixture thereof; while blending the cement components; and/or when using the composite cement to make the hydraulic building material, e.g. mortar or concrete.

Often used admixtures are water reducing agents and plasticizers like for example, but not exclusively, organic compounds with one or more functional group selected from carboxylate, sulfonate, phosphonate, phosphate or alcohol. These serve to achieve a good consistency, i.e. flowability, of the paste with a smaller amount of water. Since a decrease of water/binder ratio normally provides an increase of strength, such admixtures are commonly used.

Air entraining agents are also able to improve flowability and can be used for this aim or for other reasons such as, but not limited to, density modifications, compactibility improvements etc. Useful air entraining agents are e.g. surface active substances, especially ones based on soaps from natural resins or synthetic nonionic and ionic surfactants.

Other admixtures that influence workability are retarders. They mainly aim at prolonging the time that a specified consistency is maintained. Retarders slow the setting and/or hardening of the binder paste. Suitable substances are for example, but not exclusively, phosphates, borates, salts of Pb, Zn, Cu, As, Sb, lignosulfonates, hydroxycarboxylic acids and their salts, phosphonates, sugars (saccharides).

It is also possible to add admixtures that are designed to modify the rheology properties, i.e. rheology modifiers like polycarboxylates, lignosulfonates, starch, Karoo gum, bentonite clay, polyvinyl alcohol, and mixtures thereof.

It is also possible to add admixtures that are designed to accelerate the evolution of the setting and/or of the compressive strength development. These can be, but are not limited to, alkaline sulfates, alkaline chlorides or alkaline nitrates. In particular, an application of these accelerators combined with amines is beneficial. Suitable amines are for example, but not limited to, monoethanolamine, diglycolamine, diethanolamine, diisopropanolamine, methyldiethanolamine, triethanolamine, triisopropanolamine, and diethanol-isopropanolamine. Especially preferred are triethanolamine, triisopropanolamine, and diethanol-isopropanolamine. Application of other accelerators that are known in concrete technology is possible as well.

All admixtures are used in the amounts known as such, wherein the amount is adapted to a specific binder and special needs in the known manner.

Usual and useful additives are e.g. fillers (especially limestone and other stone dusts), pigments, reinforcing elements, self-healing agents etc. All these can be added in the amounts known per se.

Also, one or more additional SCM, i.e. other than calcined clay and RCP/cRCP, can be used. Suitable are e.g. but not limited to ground granulated blast furnace slag and other latent-hydraulic or pozzolanic slags, fly ashes both calcium rich and lean ones, burnt oil shale, natural pozzolans like volcanic ash and ground volcanic glass, artificial pozzolans, and mixtures thereof. Preferably no other SCMs or only low total amounts thereof are added, e.g. from 1 to 30 wt.-% with respect to the composite cement, preferably from 2 to 20 wt.-%.

Naturally, the amounts of all components in a specific composite cement according to the invention add up to 100 %, so if SCM and hydraulic cement are the sole components their amounts add up to 100 %, when there are other components, the amount of SCM and hydraulic cement is less than 100 %.

For use, the composite cement is transformed into a hydraulically hardening building material, e.g. into mortar or concrete, by mixing with water. Typically, a water to binder weight ratio (w/b) from 0.1 to 1, preferably from 0.15 to 0.75, and more preferred from 0.35 to 0.65 is used. The SCM according to the invention and - if applicable one or more other SCMs that are optionally added - are included into the amount of binder for calculating the w/b ratio. The mortar or concrete usually also contains aggregates as well as optionally admixtures and/or additives. Admixtures and additives have been described before.

The composite cement according to the invention is useful for all applications where ordinary Portland cement and known composite cements are used, especially concrete, mortar, and construction chemical products such as screed, tile adhesive etc.

Usually, aggregate and admixtures are added when making a hydraulically hardening building material like concrete or mortar from the composite cement according to the invention. The known aggregate and usual admixtures are used in the usual amounts. For construction chemical products like floor screed or tile adhesive any necessary aggregate and admixture is typically added to the composite cement to form a dry mix, as far as possible. The aggregate and admixture are chosen depending on use in a manner well known per se.

### Example 1

The potential for saving CO₂ emissions was calculated based on estimated amounts of carbon dioxide emitted during manufacturing the various components of composite binders shown in table 1. Clinker is a Portland cement clinker made in a state of the art cement plant using limestone as primary CaO source. Such production results in 500 kg CO₂/t clinker of process emissions, 300 kg of CO₂/t clinker coming from fuels and 45 kWh electricity per ton of clinker. Clinker grinding to a Blaine fineness around 4000 cm²/g consumes another 55 kWh/t clinker totaling at 100 kWh/t of ground clinker in cement, resulting in 26.1 kg CO₂/t of clinker in the cement from electricity. Grinding natural gypsum to a Blaine fineness of about 5000 cm²/g and its blending with the cement consumes 15 kWh/t. Calcined clay of natural origin, calcined in a state-of-the-art calciner results in fuel emissions of 150 kg CO₂/t calcined clay. An electricity consumption of 50 kWh/t was assumed for grinding to a of D₉₀ = 90 µm. Limestone quarrying, crushing and grinding in a state-of-the-art ball mill results in an electricity consumption of 15 kWh/t for a Blaine fineness of 3000 cm²/g. Concrete recycling and separation of RCP with a D₉₀ < 125 µm in a vibrating cone crusher circuit equipped with a dynamic separator consumes 10 kWh/t RCP assuming physical allocation of emissions among all products from recycling. Another 5 kWh/t RCP are needed for handling of RCP in the cement plant and its blending into the composite cement. Carbonation of RCP in a fluidized bed-type reactor to a carbonation degree of 90 % consumes 35 kWh/t RCP and binds 100 kg CO₂/t for RCP1 and 200 kg CO₂/tof RCP2, respectively, assuming a cement paste content of 50 % and 100 %, respectively. For values in table 1 an electricity emission factor of 261 g CO₂/kWh was assumed, see https://ourworldindata.org/grapher/carbon-intensity-electricity?tab=table

**Table 1**

| Material | Process emissions [kg CO₂ / t material] | Fuel and indirect emissions [kg CO₂ / t material] |
|---|---|---|
| Clinker (PC) | 500 | 326,1 |
| Gypsum (C$) | 0 | 3,915 |
| Calcined clay (cc) | 0 | 163,05 |
| Limestone (LL) | 0 | 3,915 |
| RCP | 0 | 3,915 |
| cRCP1 | -100 | 13,05 |
| cRCP2 | -200 | 13,05 |

Composite cements with differing amounts of calcined clay and either limestone or RCP/cRCP were calculated. Table 2 lists the compositions and compares the emissions for them. Therein, R denotes a reference cement according to the prior art and Inv designates a composite cement according to the invention.

**Table 2a: 25 % SCM with 10 % cc and 15 % LL/RCP/cRCP**

| component | R1 | Inv1 | Inv2 | Inv3 |
|---|---|---|---|---|
| PC | 70% | 70% | 70% | 70% |
| C$ | 5% | 5% | 5% | 5% |
| cc | 10% | 10% | 10% | 10% |
| LL | 15% | | | |
| RCP | | 15% | | |
| cRCP1 | | | 15% | |
| cRCP2 | | | | 15% |
| Process emissions | 350 | 350 | 335 | 320 |
| Fuel and indirect emissions | 245 | 245 | 247 | 247 |
| Total emissions | 595 | 595 | 582 | 567 |

**Table 2b: 25 % SCM with 20 % cc and 5 % LL/RCP/cRCP**

| component | R2 | Inv4 | Inv5 | Inv6 |
|---|---|---|---|---|
| PC | 70% | 70% | 70% | 70% |
| C$ | 5% | 5% | 5% | 5% |
| cc | 20% | 20% | 20% | 20% |
| LL | 5% | | | |
| RCP | | 5% | | |
| cRCP1 | | | 5% | |
| cRCP2 | | | | 5% |
| Process emissions | 350 | 350 | 345 | 340 |
| Fuel and indirect emissions | 261 | 261 | 262 | 262 |
| Total emissions | 611 | 611 | 607 | 602 |

**Table 2c: 45 % SCM with 35 % cc and 10 % LL/RCP/cRCP**

| component | R3 | Inv7 | Inv8 | Inv9 |
|---|---|---|---|---|
| PC | 50% | 50% | 50% | 50% |
| C$ | 5% | 5% | 5% | 5% |
| cc | 35% | 35% | 35% | 35% |
| LL | 10% | | | |
| RCP | | 10% | | |
| cRCP1 | | | 10% | |
| cRCP2 | | | | 10% |
| Process emissions | 250 | 250 | 240 | 230 |
| Fuel and indirect emissions | 221 | 221 | 222 | 222 |
| Total emissions | 471 | 471 | 462 | 452 |

It is readily apparent that composite cements according to the invention will provide significant improvements over composite cements according to the prior art from the same cement clinker and combining calcined clay and limestone as SCM. Mainly, limestone is a valuable natural resource while RCP and cRCP are waste materials. Limestone provides lower or the same compressive strength and higher or the same carbon dioxide footprint as RCP and cRCP, so replacing limestone with RCP or cRCP is able to save natural resources and in many cases also carbon dioxide emissions while achieving the same or in some cases higher strength.

### Example 2

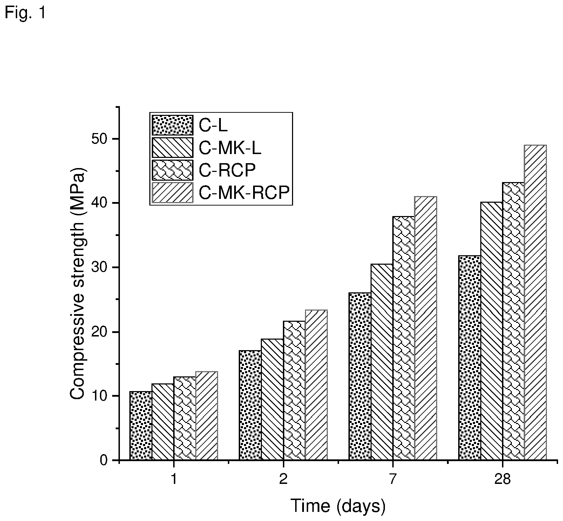

Several composite cements were made based on:
- Ordinary Portland clinker ground in the laboratory with a Blaine fineness of 3900 cm²/g as hydraulic cement (C)
- Natural limestone with a calcium carbonate content of > 90 wt.-% and industrially ground to a fineness of 3470 cm²/g (L)
- Metakaolin of industrial origin with a metakaolin content of > 90 wt.-%, a D₉₀ of 5.5 µm as measured by laser granulometry and characterized by a Rosin Rammler Slope n of 1.52 and d (63.2 %) of 2.88 as calcined clay (MK)
- Synthetic recycled cement paste, ground for deagglomeration and carbonated in a wet reactor using 100 Vol.-% CO₂ for 6 h at 20 °C to a carbonation degree of > 90 wt.-%, characterized by a D₉₀ of 105.5 µm as measured by laser granulometry as well as a Rosin Rammler Slope n of 0.55 and d (63.2 %) of 17.13 (RCP) Four composite cements containing 60 wt.-% hydraulic cement clinker and 40 % SCM were mixed in a laboratory mixer. The SOs content was brought to 3.0 % by addition of gypsum. Table 3 summarizes the composition of the composite cement without sulfate (in wt.-%) and the strength (in MPa) measured according to DIN EN 197-1. The measured strength is also depicted in figure 1.

**Table 3**

| sample | C-L | C-MK-L | C-RCP | C-MK-RCP |
|---|---|---|---|---|
| limestone | 40% | 30% | - | - |
| metakaolin | - | 10% | - | 10% |
| cRCP | - | - | 40% | 30% |
| 1 day strength | 10,7 | 11,9 | 13 | 13,8 |
| 2 day strength | 17,1 | 18,9 | 21,7 | 23,3 |
| 7 day strength | 26 | 30,5 | 37,9 | 41 |
| 28 day strength | 31,8 | 40,1 | 43,2 | 49 |

As is apparent, a composite cement with calcined clay and carbonated RCP provides significantly higher strength than one with calcined clay and limestone at the same level of SCM. At the same time, natural resources (limestone) can be saved and a waste product (RCP) made useful.

## Claims

1. Composite cement containing from 5 to 70 wt.-% cement clinker and from 30 to 95 wt.-% mixture of carbonated or not carbonated recycled cement paste and calcined clay with a weight ratio carbonated or not carbonated recycled cement paste to calcined clay from 4 to 0.1.

2. Composite cement according to claim 1 containing from 10 to 65 wt.-% cement clinker blended with from 90 to 35 wt.-% mixture of carbonated or not carbonated recycled cement paste and calcined clay, preferably from 20 to 60 wt.-% cement clinker blended with from 80 to 40 wt.-% mixture of carbonated or not carbonated recycled cement paste and calcined clay, and most preferred from 40 to 50 wt.-% cement clinker blended with from 60 to 50 wt.-% mixture of carbonated or not carbonated recycled cement paste and calcined clay.

3. Composite cement according to claim 1 or 2, wherein the weight ratio between carbonated or not carbonated recycled cement paste and calcined clay in the mixture ranges from 3 to 0.2, preferably from 2 to 0.3.

4. Composite cement according to one of claims 1 to 3, wherein the carbonated recycled cement paste has a carbonation degree from 5 to 50 wt.-%, preferably from 10 to 75 wt.-%, and most preferred from 15 to 100 wt.-% and/or
a particle size distribution of the carbonated or not carbonated recycled cement paste (cRCP or RCP) has a d₉₀ < 110 µm, preferably a d₉₀ < 100 µm, and most preferred a d₉₀ < 90 µm.

5. Composite cement according to one of claims 1 to 4, wherein the calcined clay is obtained from a raw clay containing from 20 to 100 wt.-% kaolinite and/or
a particle size distribution of the calcined clay has a d₉₀ < 110 µm, preferably a d₉₀ < 100 µm, and most preferred a d₉₀ < 90 µm.

6. Composite cement according to one of claims 1 to 5, wherein the composite cement contains admixtures and/or additives.

7. Composite cement according to one of claims 1 to 6, wherein the composite cement contains one or more other supplementary cementitious materials than calcined clay and carbonated or not carbonated recycled cement paste, especially ground granulated blast furnace slag and/or other latent-hydraulic or pozzolanic slag, fly ash, burnt oil shale, and/or natural pozzolans like volcanic ash and ground volcanic glass.

8. Method for manufacturing a composite cement wherein from 5 to 70 wt.-% cement clinker is blended with from 30 to 95 wt.-% mixture of carbonated or not carbonated recycled cement paste and calcined clay with a weight ratio carbonated recycled cement paste to calcined clay from 4 to 0.1 in the mixture.

9. Method according to claim 8, wherein from 10 to 65 wt.-% cement clinker are blended with from 90 to 35 wt.-% mixture of carbonated or not carbonated recycled cement paste and calcined clay, preferably from 20 to 60 wt.-% cement clinker are blended with from 80 to 40 wt.-% mixture of carbonated or not carbonated recycled cement paste and calcined clay, and most preferred from 40 to 50 wt.-% cement clinker are blended with from 60 to 50 wt.-% mixture of carbonated or not carbonated recycled cement paste and calcined clay.

10. Method according to claim 8 or 9, wherein the weight ratio between carbonated or not carbonated recycled cement paste and calcined clay in the mixture is adjusted to range from 3 to 0.2, preferably from 2 to 0.3.

11. Method according to one of claims 8 to 10, wherein the composite cement is obtained by co-grinding of at least two components or by separate grinding of all components.

12. Method according to one of claims 8 to 11, wherein recycled cement paste is carbonated by a wet, a semi dry or a dry method and/or naturally carbonated recycled cement paste is used.

13. Method according to one of claims 8 to 12, wherein the carbonated recycled cement paste is carbonated to a carbonation degree from 5 to 50 wt.-%, preferably from 10 to 75 wt.-%, and most preferred from 15 to 100 wt.-% and/or
the carbonated or not carbonated recycled cement paste (cRCP or RCP) is ground to a particle size distribution having a d₉₀ < 110 µm, preferably a d₉₀ < 100 µm, and most preferred a d₉₀ < 90 µm.

14. Method according to one of claims 8 to 13, wherein the calcined clay is obtained from a raw clay containing from 20 to 100 wt.-% kaolinite
and/or
the calcined clay is ground to a particle size distribution having a d₉₀ < 110 µm, preferably a d₉₀ < 100 µm, and most preferred a d₉₀ < 90 µm.

15. Method according to one of claims 8 to 14, wherein admixtures and/or additives are added - independently from each other - to a carbonation of the recycled cement paste; during a grinding of the cement clinker, carbonated or not carbonated recycled cement paste, calcined clay or any mixture thereof; and/or while blending the cement components.

16. Method for manufacturing a hydraulically hardening building material from a cement, wherein during mixing of the hydraulically hardening building material from 5 to 70 wt.-% ground cement clinker is blended with from 30 to 95 wt.-% of a mixture of carbonated or not carbonated recycled cement paste and calcined clay with a weight ratio carbonated or not carbonated recycled cement paste to calcined clay from 4 to 0.1 or a composite cement according to one of claims 1 to 7 is used as the cement.

## Patentansprüche

1. Kompositzement enthaltend von 5 bis 70 Gew.-% Zementklinker und von 30 bis 95 Gew.-% einer Mischung aus karbonatisiertem oder nicht karbonatisiertem, recyceltem Zementleim und kalziniertem Ton mit einem Gewichtsverhältnis von karbonatisiertem oder nicht karbonatisiertem, recyceltem Zementleim zu kalziniertem Ton von 4 bis 0,1.

2. Kompositzement gemäß Anspruch 1 enthaltend von 10 bis 65 Gew.-% Zementklinker, gemischt mit von 90 bis 35 Gew.-% einer Mischung aus karbonatisiertem oder nicht karbonatisiertem, recyceltem Zementleim und kalziniertem Ton, bevorzugt von 20 bis 60 Gew.-% Zementklinker gemischt mit von 80 bis 40 Gew.-% einer Mischung aus karbonatisiertem oder nicht karbonatisiertem, recyceltem Zementleim und kalziniertem Ton und besonders bevorzugt von 40 bis 50 Gew.-% Zementklinker gemischt mit von 60 bis 50 Gew.-% einer Mischung aus karbonatisiertem oder nicht karbonatisiertem, recyceltem Zementleim und kalziniertem Ton.

3. Kompositzement gemäß Anspruch 1 oder 2, wobei das Gewichtsverhältnis zwischen karbonatisiertem oder nicht karbonatisiertem, recyceltem Zementleim und kalziniertem Ton in der Mischung im Bereich von 3 bis 0,2, bevorzugt von 2 bis 0,3, liegt.

4. Kompositzement gemäß einem der Ansprüche 1 bis 3, wobei der karbonatisierte, recycelte Zementleim einen Karbonatisierungsgrad von 5 bis 50 Gew.-%, bevorzugt von 10 bis 75 Gew.-% und besonders bevorzugt von 15 bis 100 Gew.-% hat
und/oder
eine Partikelgrößenverteilung des karbonatisierten oder nicht karbonatisierten, recycelten Zementleims (cRCP oder RCP) ein d₉₀ < 110 µm, bevorzugt ein d₉₀ < 100 µm und besonders bevorzugt ein d₉₀ < 90 µm aufweist.

5. Kompositzement gemäß einem der Ansprüche 1 bis 4, wobei der kalzinierte Ton aus einem Rohton erhalten wird, der von 20 bis 100 Gew.-% Kaolinit enthält,
und/oder
eine Partikelgrößenverteilung des kalzinierten Tons ein d₉₀ < 110 µm, bevorzugt ein d₉₀ < 100 µm und besonders bevorzugt ein d₉₀ < 90 µm aufweist.

6. Kompositzement gemäß einem der Ansprüche 1 bis 5, wobei der Kompositzement Zusatzmittel und/oder Zusatzstoffe enthält.

7. Kompositzement gemäß einem der Ansprüche 1 bis 6, wobei der Kompositzement ein oder mehrere andere Klinkerersatzmaterialien als kalzinierten Ton und karbonatisierten oder nicht karbonatisierten, recycelten Zementleim enthält, insbesondere Hüttensand und/oder andere latent-hydraulische oder puzzolanische Schlacke, Flugasche, gebrannten Ölschiefer und/oder natürliche Puzzolane wie Vulkanasche und gemahlenes vulkanisches Glas.

8. Verfahren zur Herstellung eines Kompositzements, wobei von 5 bis 70 Gew.-% Zementklinker mit von 30 bis 95 Gew.-% einer Mischung aus karbonatisiertem oder nicht karbonatisiertem, recyceltem Zementleim und kalziniertem Ton mit einem Gewichtsverhältnis von karbonatisiertem, recyceltem Zementleim zu kalziniertem Ton in der Mischung von 4 bis 0,1 vermischt werden.

9. Verfahren gemäß Anspruch 8, wobei von 10 bis 65 Gew.-% Zementklinker mit von 90 bis 35 Gew.-% einer Mischung aus karbonatisiertem oder nicht karbonatisiertem, recyceltem Zementleim und kalziniertem Ton vermischt werden, bevorzugt von 20 bis 60 Gew.-% Zementklinker mit von 80 bis 40 Gew.-% einer Mischung aus karbonatisiertem oder nicht karbonatisiertem, recyceltem Zementleim und kalziniertem Ton vermischt werden und besonders bevorzugt von 40 bis 50 Gew.-% Zementklinker mit von 60 bis 50 Gew.-% einer Mischung aus karbonatisiertem oder nicht karbonatisiertem, recyceltem Zementleim und kalziniertem Ton vermischt werden.

10. Verfahren gemäß Anspruch 8 oder 9, wobei das Gewichtsverhältnis zwischen karbonatisiertem oder nicht karbonatisiertem, recyceltem Zementleim und kalziniertem Ton in der Mischung im Bereich von 3 bis 0,2, bevorzugt von 2 bis 0,3, eingestellt wird.

11. Verfahren gemäß einem der Ansprüche 8 bis 10, wobei der Kompositzement durch gemeinsames Mahlen von mindestens zwei Komponenten oder durch getrenntes Mahlen aller Komponenten erhalten wird.

12. Verfahren gemäß einem der Ansprüche 8 bis 11, wobei recycelter Zementleim durch ein nasses, halbtrockenes oder trockenes Verfahren karbonatisiert wird und/oder natürlich karbonatisierter recycelter Zementleim verwendet wird.

13. Verfahren gemäß einem der Ansprüche 8 bis 12, wobei der karbonatisierte, recycelte Zementleim auf einen Karbonatisierungsgrad von 5 bis 50 Gew.-%, bevorzugt von 10 bis 75 Gew.-% und besonders bevorzugt von 15 bis 100 Gew.-% karbonisiert wird
und/oder
der karbonatisierte oder nicht karbonatisierte, recycelte Zementleim (cRCP oder RCP) auf eine Partikelgrößenverteilung mit einem d₉₀ < 110 µm, bevorzugt einem d₉₀ < 100 µm und besonders bevorzugt einem d₉₀ < 90 µm gemahlen wird.

14. Verfahren gemäß einem der Ansprüche 8 bis 13, wobei der kalzinierte Ton aus einem Rohton erhalten wird, der von 20 bis 100 Gew.-% Kaolinit enthält, und/oder
der kalzinierte Ton auf eine Partikelgrößenverteilung mit einem d₉₀ < 110 µm, bevorzugt einem d₉₀ < 100 µm und besonders bevorzugt einem d₉₀ < 90 µm gemahlen wird.

15. Verfahren gemäß einem der Ansprüche 8 bis 14, wobei Zusatzmittel und/oder Zusatzstoffe - unabhängig voneinander - einer Karbonatisierung des recycelten Zementleims, während eines Mahlens des Zementklinkers, des karbonatisierten oder nicht karbonatisierten, recycelten Zementleims, des kalzinierten Tons oder einer beliebigen Mischung davon; und/oder während des Mischens der Zementkomponenten zugesetzt werden.

16. Verfahren zur Herstellung eines hydraulisch erhärtenden Baustoffs aus einem Zement, wobei während des Mischens des hydraulisch erhärtenden Baustoffs von 5 bis 70 Gew.-% gemahlener Zementklinker mit von 30 bis 95 Gew.-% einer Mischung aus karbonatisiertem oder nicht karbonatisiertem, recyceltem Zementleim und gebranntem Ton mit einem Gewichtsverhältnis von karbonatisiertem oder nicht karbonatisiertem, recyceltem Zementleim zu gebranntem Ton von 4 zu 0,1 gemischt werden oder ein Kompositzement gemäß einem der Ansprüche 1 bis 7 als Zement verwendet wird.

## Revendications

1. Ciment composite contenant de 5% à 70 % en poids de clinker de ciment et de 30% à 95 % en poids de mélange de pâte de ciment recyclé carbonatée ou non carbonatée et d'argile calcinée selon un rapport de poids de la pâte de ciment recyclé carbonatée ou non carbonatée à l'argile calcinée de 4 à 0,1.

2. Ciment composite selon la revendication 1, contenant de 10% à 65 % en poids de clinker de ciment mélangé avec de 90% à 35 % en poids de mélange de pâte de ciment recyclé carbonatée ou non carbonatée et d'argile calcinée, de préférence de 20% à 60 % en poids de clinker de ciment mélangé avec de 80% à 40 % en poids de mélange de pâte de ciment recyclé carbonatée ou non carbonatée et d'argile calcinée, et de manière préférée entre toutes de 40% à 50 % en poids de clinker de ciment mélangé avec de 60% à 50 % en poids de mélange de pâte de ciment recyclé carbonatée ou non carbonatée et d'argile calcinée.

3. Ciment composite selon la revendication 1 ou 2, dans lequel le rapport de poids entre la pâte de ciment recyclé carbonatée ou non carbonatée et l'argile calcinée dans le mélange est compris entre 3 et 0,2, de préférence entre 2 et 0,3.

4. Ciment composite selon l'une des revendications 1 à 3, dans lequel la pâte de ciment recyclé carbonatée présente un degré de carbonatation de 5% à 50 % en poids, de préférence de 10% à 75 % en poids, et de manière préférée entre toutes de 15% à 100 % en poids
et/ou
une distribution granulométrique de la pâte de ciment recyclé carbonatée ou non carbonatée (cRCP ou RCP) présente un d₉₀ < 110 µm, de préférence un d₉₀ < 100 µm, et de manière préférée entre toutes un d₉₀ < 90 µm.

5. Ciment composite selon l'une des revendications 1 à 4, dans lequel l'argile calcinée est obtenue à partir d'une argile brute contenant de 20% à 100 % en poids de kaolinite
et/ou
une distribution granulométrique de l'argile calcinée présente un d₉₀ < 110 µm, de préférence un d₉₀ < 100 µm, et de manière préférée entre toutes un d₉₀ < 90 µm.

6. Ciment composite selon l'une des revendications 1 à 5, dans lequel le ciment composite contient des adjuvants et/ou des additifs.

7. Ciment composite selon l'une des revendications 1 à 6, dans lequel le ciment composite contient un ou plusieurs matériaux cimentaires supplémentaires autres que l'argile calcinée et la pâte de ciment recyclé carbonatée ou non carbonatée, notamment du laitier granulé de haut fourneau broyé et/ou un autre laitier hydraulique latent ou pouzzolanique, des cendres volantes, des schistes bitumineux calcinés et/ou des pouzzolanes naturelles telles que des cendres volcaniques et du verre volcanique broyé.

8. Procédé de fabrication d'un ciment composite dans lequel de 5% à 70 % en poids de clinker de ciment est mélangé à 30% à 95 % en poids de mélange de pâte de ciment recyclé carbonatée ou non carbonatée et d'argile calcinée selon un rapport de poids de la pâte de ciment recyclé carbonatée à l'argile calcinée de 4 à 0,1 dans le mélange.

9. Procédé selon la revendication 8, dans lequel de 10% à 65 % en poids de clinker de ciment sont mélangés avec de 90% à 35 % en poids de mélange de pâte de ciment recyclé carbonatée ou non carbonatée et d'argile calcinée, de préférence de 20% à 60 % en poids de clinker de ciment sont mélangés avec de 80% à 40 % en poids de mélange de pâte de ciment recyclé carbonatée ou non carbonatée et d'argile calcinée, et de manière préférée entre toutes de 40% à 50 % en poids de clinker de ciment sont mélangés avec de 60% à 50 % en poids de mélange de pâte de ciment recyclé carbonatée ou non carbonatée et d'argile calcinée.

10. Procédé selon la revendication 8 ou 9, dans lequel le rapport de poids entre la pâte de ciment recyclé carbonatée ou non carbonatée et l'argile calcinée dans le mélange est ajusté pour être compris entre 3 et 0,2, de préférence entre 2 et 0,3.

11. Procédé selon l'une des revendications 8 à 10, dans lequel le ciment composite est obtenu par cobroyage d'au moins deux constituants ou par broyage séparé de tous les constituants.

12. Procédé selon l'une des revendications 8 à 11, dans lequel la pâte de ciment recyclé est carbonatée par un procédé par voie humide, semi-sèche ou sèche et/ou une pâte de ciment recyclé naturellement carbonatée est utilisée.

13. Procédé selon l'une des revendications 8 à 12, dans lequel la pâte de ciment recyclé carbonatée est carbonatée à un degré de carbonatation de 5% à 50 % en poids, de préférence de 10% à 75 % en poids, et de manière préférée entre toutes de 15% à 100 % en poids
et/ou
la pâte de ciment recyclé carbonatée ou non carbonatée (cRCP ou RCP) est broyée à une distribution granulométrique ayant un d₉₀ < 110 µm, de préférence un d₉₀ < 100 µm, et de manière préférée entre toutes un d₉₀ < 90 µm.

14. Procédé selon l'une des revendications 8 à 13, dans lequel l'argile calcinée est obtenue à partir d'une argile brute contenant de 20% à 100 % en poids de kaolinite
et/ou
l'argile calcinée est broyée jusqu'à une distribution granulométrique ayant un d₉₀ < 110 µm, de préférence un d₉₀ < 100 µm, et de manière préférée entre toutes un d₉₀ < 90 µm.

15. Procédé selon l'une des revendications 8 à 14, dans lequel des adjuvants et/ou des additifs sont ajoutés - indépendamment les uns des autres - à une carbonatation de la pâte de ciment recyclé ; pendant un broyage du clinker de ciment, de la pâte de ciment recyclé carbonatée ou non carbonatée, de l'argile calcinée ou d'un quelconque mélange de ceux-ci ; et/ou pendant le mélange des constituants du ciment.

16. Procédé de fabrication d'un matériau de construction à durcissement hydraulique à partir d'un ciment, dans lequel, lors du mélange du matériau de construction à durcissement hydraulique, de 5% à 70 % en poids de clinker de ciment broyé est mélangé avec 30% à 95 % en poids d'un mélange de pâte de ciment recyclé carbonatée ou non carbonatée et d'argile calcinée selon un rapport de poids de la pâte de ciment recyclé carbonatée ou non carbonatée à l'argile calcinée de 4 à 0,1 ou un ciment composite selon l'une des revendications 1 à 7 est utilisé comme ciment.
